# FASCICULE DE BREVET EUROPEEN

(11) **EP 0 672 027 B1**
(45) Date de publication et mention de la délivrance du brevet: **04.02.1998**
(21) Numéro de dépôt: 93921969.7
(22) Date de dépôt: 30.09.1993
(51) Int. Cl.: C05D 3/04, C05F 11/04

(54) **PROCEDE DE VEGETALISATION D'UN SOL**
VERFAHREN ZUR WIEDERBEPFLANZUNG EINES BODENS
GROUND VEGETATING METHOD

(43) Date de publication de la demande: 20.09.1995
(73) Titulaire: SOTEV SA, 21000 Dijon (FR)
(72) Inventeur: de Malliard, Hugues, 21000 Dijon (FR)
(74) Mandataire: Bruder, Michel
(86) Numéro de dépôt international: FR9300953
(87) Numéro de publication internationale: WO9509137

(56) Documents cités:
- EP-A- 0 075 541
- EP-A- 0 445 530
- FR-A- 1 049 687
- US-A- 1 442 239
- US-A- 4 369 054
- US-A- 4 846 870

## Description

La présente invention concerne un procédé de végétalisation d'un sol stérile ou appauvri par toute intervention humaine ou naturelle, par reconstitution simultanée, avant l'installation de toute flore sur le sol à traiter, de la microflore, de la microfaune et d'un horizon intermédiaire riche en humus et en complexe argilo-humique sous la litière végétale de surface.

On connaît un certain nombre de procédés de végétalisation de sols rendus stériles à la suite de travaux de terrassement (construction des infrastructures routières, déboisement excessif, etc). Un procédé d'engazonnement très utilisé consiste notamment à projeter des semences et des engrais sur le sol stérile ou appauvri qu'il convient de traiter, combinés, le cas échéant, avec des produits colloïdes, ce semis étant le plus souvent protégé par une couverture fibreuse obtenue à partir de fétus de paille encollés avec de l'émulsion de bitume.

Ce procédé rudimentaire, qui ne tient aucun compte de la complexité de la vie végétale, se révèle la plupart du temps inefficace ; on s'aperçoit en effet que, même si une végétation s'établit sur le sol ainsi traité, la flore reste pauvre et fragile. En outre, ce procédé s'avère totalement inutilisable sur les sols trop pauvres ou trop acides.

On connaît également les brevets FR-A-2.158.090 et JP-A-63.294.712 qui décrivent de manière assez semblable un conditionneur de sol fertilisant obtenu par fermentation aérobie d'un mélange de substances d'origine végétale et animale. L'obtention et l'emploi d'un conditionneur de sol fertilisant obtenu par fermentation présentent plusieurs inconvénients majeurs. La réaction de fermentation aérobie est une réaction lente, donc coûteuse, dont la mise en oeuvre nécessite un respect rigoureux des conditions d'humidité et de température. Un conditionneur de sol obtenu par fermentation aérobie contient des substances nutritives directement assimilables par les plantes ainsi que de l'acide humique qui, par combinaison avec l'argile du sol, forme le complexe argilo-humique nécessaire au conditionnement dudit sol.

Par contre, un tel conditionneur de sol ne contient pas les substances nutritives nécessaires à l'alimentation des micro-organismes et des bactéries du sol. Par conséquent, un tel conditionneur de sol peut convenir à la fertilisation d'un sol appauvri par une exploitation trop intense par exemple, mais pas à la végétalisation d'un sol profondément bouleversé où n'existe plus un cycle biologique minimum.

On connaît par ailleurs le brevet FR-A-2.626.571 qui ne se distingue des brevets FR-A-2.158.090 et JP-A-63.294.712 cités précédemment qu'en ce qu'il suggère d'interrompre la réaction de fermentation aérobie avant complète transformation, afin de réguler les proportions de matière végétale transformée, directement assimilable par les plantes, et non transformée, non directement assimilable par les plantes. Dans ce cas, aux difficultés de mise en oeuvre du procédé de fermentation déjà évoquées précédemment vient s'ajouter le problème, mal maîtrisé jusqu'à ce jour, de l'interruption d'une telle réaction de fermentation. Ainsi, le procédé décrit dans le brevet FR-A-2.626.571 ne permet-il pas de contrôler, avec la précision souhaitée, la fraction de matière végétale non transformée apportée au sol à végétaliser dont il devient impossible de prévoir et, en tout cas, contrôler la reprise d'un cycle biologique normal.

La présente invention vise à remédier à tous ces inconvénients en proposant un nouveau procédé de végétalisation d'un sol stérile ou appauvri par toute intervention humaine ou naturelle, destiné à reconstituer rapidement et naturellement un horizon biologique complexe, avec une flore et une faune comparables à celles que l'on rencontre dans les sols non perturbés. A cet effet, l'invention est caractérisée en ce que, avant l'installation de toute flore sur le sol à traiter, on reconstitue la vie du sous-sol en recréant simultanément la microflore, la microfaune et un horizon intermédiaire riche en humus et en complexe argilo-humique sous la litière végétale de surface.

Cet objectif est atteint par épandage simultané sur le sol à végétaliser d'un mélange avec de l'eau au moins constitué :
- d'une matière humifiable additionnée d'au moins un produit contenant de l'azote sous forme organique, destiné à faire fermenter ladite matière humifiable,
- d'une farine végétale non fermentée, riche en oligo-éléments anticarentiels,
- de micro-organismes et de bactéries,

ces produits étant conditionnés séparement et mélangés au moment de leur application sur le terrain.

Ces trois composants réagissent entre eux et au contact de l'argile et des sels minéraux du sol pour reconstituer l'horizon intermédiaire dudit sol, c'est-à-dire produire un complexe argilo-humique propre à stabiliser mécaniquement ledit sol et à fixer les micro-organismes et les bactéries développés par la mise en contact de la matière humifiable et de la farine végétale.

De cette façon, le mélange suivant l'invention apporte au sol à végétaliser les trois éléments nécessaires et indispensables à la restauration de la vie du sol :
- d'abord, la matière humifiable choisie conformément à l'invention est un conditionneur de sol qui procure un support aux plantations ; il se substitue ainsi provisoirement au complexe argilo-humique anormalement absent du sol, dépourvu de terre végétale, et permet la germination de semences ainsi que le développement d'un système radiculaire suffisant pour diviser la terre végétale nouvellement formée. Par la suite, la matière humifiable est transformée, sous l'action des micro-organismes et des bactéries, en humus et en acide humique, ledit acide humique se combinant avec l'argile du sol pour donner le complexe argilo-humique propre à stabiliser durablement le sol à végétaliser.
- ensuite, les bactéries et les micro-organismes qui sont chargés de la transformation périodique des racines et de la partie aérienne des végétaux - ce qui permet de fixer les éléments atmosphériques et notamment l'azote de l'air - sont contenus en quantité suffisante et équilibrée dans le mélange initialement épandu sur le sol à végétaliser.
- enfin, le mélange contient également de la farine végétale non fermentée qui constitue la réserve alimentaire des micro-organismes et des bactéries, le temps nécessaire au rétablissement de la vie du sol et à la croissance des premiers végétaux. La farine végétale non fermentée est transformée par les micro-organismes et les bactéries en substances minérales directement assimilables par les plantes.

Le cas échéant, sur un sol pauvre en calcium ou en potassium actif, il est prévu de répandre également sur ledit sol, en même temps que les produits précédents, des carbonates de calcium ou de potassium favorisant la floculation des colloïdes argileux. Cet apport peut se faire sous forme de scories.

Lorsque le sol vit et que sa structure est comparable à celle d'une terre arable, il est possible d'y déposer des graines, des plantules ou des mini-plantules qui vont pouvoir prospérer et reconstituer une végétation harmonieuse choisie en fonction du site et des conditions climatiques.

A cet égard, dans une variante avantageuse de l'invention, il est proposé d'épandre les semences sur le sol encore non traité, soit en même temps que les produits nécessaires à la mise en place d'un horizon biologique du sol. A cet effet, les graines semées sont choisies de manière à ce qu'elles puissent se suffire à elles-mêmes le temps requis à la constitution des horizons intermédiaires nourriciers ; après un premier délai de germination variable selon la variété de la semence, les plantes se nourrissent donc des réserves d'amidon contenues dans la graine jusqu'à épuisement de ces dernières. Passés ces délais cumulés de germination et d'épuisement de l'amidon, les végétaux semés s'émancipent et vivent en puisant des solutions nutritives dans le sol nouvellement revivifié.

Afin que ces nouveaux plants puissent prospérer, il est prévu, conformément à une caractéristique complémentaire de l'invention, de réaliser un apport d'engrais complétant ou équilibrant les éléments nutritifs naturellement présents dans le sol, ou apportés par la matière humifiable et la farine végétale. Ces engrais, avantageusement extraits de produits de base naturels, les moins élaborés possible, comprennent des composés classiques tels que l'azote, le phosphore et la potasse.

Un complément en oligo-éléments anticarentiels est le cas échéant ajouté à cet apport d'engrais ; l'homme du métier ordinaire saura déterminer la nature et la quantité de ces oligo-éléments en fonction d'une analyse préliminaire du sol, des quantités présentes dans la farine végétale et la matière humifiable déjà répandues sur ce dernier, et ce, bien entendu, en tenant compte des variétés végétales semées, dont on sait bien que les besoins sont variés.

Dans certaines circonstances très défavorables à la reprise d'une végétation, et notamment dans le cas des sols soumis à la battance des pluies ou à un climat rude, il est enfin prévu de procurer une couverture aux semences répandues sur le sol. Cette couverture peut être réalisée classiquement à partir de fétus de paille encollés à l'émulsion de bitume et est destinée à créer une micro-ambiance chaude et humide favorisant la germination et protégeant les jeunes pousses contre les rigueurs climatiques.

Préférentiellement, cette couverture contiendra uniquement des matières cellulosiques transformables en acide humique, à l'exception de toute émulsion de bitume. La couverture pourra être avantageusement constituée de fines particules de papier de récupération encollées à l'aide d'un agent colloïdal.

On décrira maintenant plus en détail le procédé de végétalisation préconisé par l'invention, au travers d'un certain nombre d'applications données à titre d'exemples non limitatifs.

On aura compris de ce qui précède que l'invention résulte d'une approche résolument nouvelle de la végétalisation de sols rendus stériles à la suite de travaux de terrassement ou à la suite d'une pollution de matières s'opposant à la végétation (métaux lourds notamment ou appauvri par toute intervention humaine ou naturelle. En effet, pour obtenir une végétation de surface durable et résistante, il est essentiel de s'occuper avant toute chose de l'équilibre et de la pérennité de la partie enterrée des végétaux ; à cet égard, il convient de rappeler que la partie aérienne des végétaux d'une prairie ne représente que 10% environ de la matière végétale vivante s'y trouvant. De ce constat, la présente invention tire la conséquence que, pour faire revivre un sol, il convient de mettre en place :
1) des germes vivants, autrement dénommés micro-organismes et bactéries, dont le rôle est de transformer des matières végétales humifiables en acide humique et humus ; ce dernier se combine alors avec l'argile pour former le complexe argilo-humique nécessaire au stockage et à la conservation des éléments indispensables à la croissance des générations végétales postérieures. Suivant un mode d'exécution préférentiel de l'invention, l'apport en matières humifiables peut être constitué par du lignite broyé, tamisé et additionné d'un composé organique azoté susceptible de provoquer sa fermentation.
2) la nourriture de ces germes vivants, qui est obtenue par un apport d'une farine végétale, par exemple d'origine marine. A cet égard, on utilisera préférentiellement des farines d'algues non traitées, naturellement riches en acide alginique (de l'ordre de 25 % en poids), et provenant du broyage d'algues laminaires, de fucus ou autres. Ce type de farine, normalement employé pour l'alimentation animale, est à distinguer des extraits d'algues non broyées utilisés comme engrais des cultures ; il est en effet important que les éléments nutritifs des micro-organismes soient miscibles dans l'eau pour être intimement mélangés avec la matière humifiable. En outre, on observera que si l'effet colloïdal de ces farines est favorable à la structuration du sol, cet effet, dû à l'abondance d'alginates, n'est pas essentiel au procédé conforme à l'invention ; à ce titre, il est plus important que les algues broyées en poudre ne soient pas traitées, ce qui permet de conserver intacts les micro-organismes et les bactéries naturellement présents au coeur desdites algues.
3) des semences et/ou des plantules élevées in vitro. Dans le cas de semences, le délai normal de germination est compris entre 10 et 30 jours et le délai d'épuisement de l'amidon varie, selon les graines, entre 15 et 30 jours ; de cette façon, l'apport combiné de micro-organismes, de bactéries, de farines végétales non fermentées et de matière humifiable fermentée doit reconstituer un semblant de terre végétale vivante dans un délai variant entre 25 et 60 jours. Passé ce délai, un cycle végétal quasiment normal est susceptible de s'instaurer.
4) des engrais, nécessaires à la croissance des plantules et/ou des semences ayant germées. Il est important de remarquer que la quantité d'engrais ne doit pas être trop importante car les cristallisations salines de l'engrais peuvent venir étouffer ou stériliser les semences et la couverture cellulosique ; cet aspect de l'invention est totalement négligé dans les procédés concurrents.
5) une couverture fibreuse, qui peut également agir comme source de matière humifiable et comme nourriture des micro-organismes.
6) des produits adjuvants destinés à corriger les défauts du sol (pH notamment) et des produits dépolluants dont la fonction est d'effacer les effets néfastes de toutes les charges ayant été déposées antérieurement dans le sol.

Cet ensemble de produits sont conditionnés séparément en sac et sont mélangés avec de l'eau au moment de leur application sur le terrain ; il est alors possible de projeter ce mélange sur le sol, préférentiellement à l'aide d'un hydro-semoir. Cet appareil connu est constitué d'une cuve de grande capacité dans laquelle un agitateur mélange d'une façon homogène les différents produits ; cette solution est envoyée sous forte pression dans un canon d'aspersion qui a une portée de 30 à 60 mètres. Ce canon peut se déplacer pour atteindre tous les points du terrain ou être prolongé par un tuyau mobile de 10 à plusieurs centaines de mètres de longueur, permettant d'augmenter la distance de semis. Chaque cuve d'une contenance d'environ 5000 litres permet d'ensemencer, en un seul ou plusieurs passages, une surface de 2000 à 5000 m². On observera que cette technique d'ensemencement préférentielle assure une répartition homogène et régulière du mélange et procure l'avantage d'être bien adaptée aux terrains difficiles d'accès. Dans une seconde phase, généralement au printemps, il peut être nécessaire de réaliser une fertilisation afin de permettre un développement complet des plantes semées ; cette fertilisation permet de suivre et de corriger la pousse des plantes en leur apportant les éléments dont elles ont besoin aux différents stades de leur croissance, jusqu'au moment où elles atteignent l'âge adulte (à savoir environ 2 ans pour les graminées et plusieurs années pour les arbres et les arbustes). On observera enfin qu'il est important de ne pas mélanger les produits dans un même conditionnement avant leur épandage sur le terrain ; en effet, on a pu mettre en évidence que la matière humifiable fermentée réagit alors avec la farine végétale non fermentée, leur réaction inhibant l'effet de l'un et de l'autre définitivement ; a contrario, la mise en évidence de ce phénomène démontre l'efficience du procédé conforme à l'invention lorsque les deux mêmes produits sont répandus simultanément sur le sol.

## Revendications

1. Procédé de végétalisation d'un sol stérile ou appauvri par toute intervention humaine ou naturelle, *caractérisé* en ce que, avant l'installation de toute flore sur le sol à traiter, on mélange avec de l'eau, sur le terrain, des produits conditionnés séparémment comprenant au moins un premier produit constitué par : une matière humifiable additionnée d'au moins un produit contenant de l'azote sous forme organique destiné à faire fermenter ladite matière humifiable, un second produit constitué par une farine végétale non fermentée, riche en oligo-éléments anticarentiels, et un troisième produit constitué par des micro-organismes et de bactéries, et on projette sur le sol le mélange liquide ainsi formé.

2. Procédé de végétalisation selon la revendication 1, *caractérisé* en ce que, sur un sol pauvre en calcium ou en potassium actif, on ajoute au mélange liquide des carbonates de calcium ou de potassium.

3. Procédé de végétalisation selon la revendication 2, *caractérisé* en ce que les carbonates sont apportées sous forme de scories.

4. Procédé de végétalisation selon l'une quelconque des revendications précédentes, *caractérisé* en ce que, simultanément ou postérieurement à l'épandage de la matière humifiable, de la farine végétale non fermentée et des micro-organismes, on réalise un semis de variétés végétales diverses, les graines des végétaux semées étant choisies de manière à ce qu'elles puissent se suffire à elles-mêmes le temps requis à la constitution des horizons intermédiaires nourriciers dans le sol.

5. Procédé de végétalisation selon l'une quelconque des revendications précédentes, *caractérisé* en ce que, simultanément ou postérieurement à l'épandage de la matière humifiable, de la farine végétale non fermentée et des micro-organismes, on réalise un apport d'engrais complétant ou équilibrant les éléments nutritifs naturellement présents dans le sol, ou apportés par ladite matière humifiable et ladite farine végétale.

6. Procédé de végétalisation selon l'une quelconque des revendications 3 ou 4, *caractérisé* en ce qu'on procure une couverture aux semences répandues sur le sol.

7. Procédé de végétalisation selon la revendication 6, *caractérisé* en ce que la couverture contient uniquement des matières cellulosiques transformables en acide humique, à l'exception de toute émulsion de bitume.

8. Procédé de végétalisation suivant la revendication 7, *caractérisé* en ce que la couverture est constituée de fines particules de papier de récupération encollées à l'aide d'un agent colloïdal.

9. Procédé de végétalisation selon l'une quelconque des revendications précédentes, *caractérisé* en ce que la matière humifiable est constituée par du lignite broyé et additionnée d'un composé organique azoté susceptible de provoquer sa fermentation.

10. Procédé de végétalisation selon l'une quelconque des revendications précédentes, *caractérisé* en ce que la farine végétale employée est d'origine marine.

11. Procédé de végétalisation selon la revendication précédente, *caractérisé* en ce que la farine végétale employée est une farine d'algues non traitées, naturellement riches en acide alginique, et provenant du broyage d'algues.

## Claims

1. Process for revegetating soil that is sterile or impoverished due to human or natural activity,
*characterized in that*
prior to the planting of any flora on the soil to be treated, separately packaged products are mixed with water on site, the said products including at least a first product consisting of: a humifiable material to which has been added at least one product containing nitrogen in organic form intended to ferment the said humifiable material, a second product consisting of an unfermented plant meal rich in trace elements to prevent deficiencies, and a third product consisting of micro-organisms and bacteria, and the liquid mixture so formed is sprayed on the soil.

2. Revegetating process according to Claim 1,
*characterized in that*
in the case of a soil poor in active calcium or potassium, calcium or potassium carbonates are added to the liquid mixture.

3. Revegetating process according to Claim 2,
*characterized in that*
the carbonates are provided in the form of slag.

4. Revegetating process according to any of the preceding Claims,
*characterized in that*
at the time when the humifiable material, the unfermented plant meal and the micro-organisms are spread, a variety of different plants are sown, the seeds of the plants sown being chosen such that they can survive the time required for the constitution of intermediate nutrient structures in the soil.

5. Revegetating process according to any of the preceding Claims,
*characterized in that*
at the same time as or after the spreading of the humifiable material, the unfermented plant meal and the micro-organisms, fertilizer is laid down to supplement or balance the nutritive elements naturally present in the soil or supplied by the said humifiable material and by the said plant meal.

6. Revegetating process according to either of Claims 3 or 4,
*characterized in that*
a cover is provided for the seeds spread on the soil.

7. Revegetating process according to Claim 6,
*characterized in that*
the cover contains only cellulose materials that can be transformed to humic acid, except for any bituminous emulsion.

8. Revegetating process according to Claim 7,
*characterized in that*
the cover consists of fine particles of recycled paper stuck together with a colloidal agent.

9. Revegetating process according to any of the preceding Claims,
*characterized in that*
the humifiable material consists of ground lignite to which has been added an organic nitrogen-containing compound which can induce its fermentation.

10. Revegetating process according to any of the preceding Claims,
*characterized in that*
the plant meal used is of marine origin.

11. Revegetating process according to the preceding Claim,
*characterized in that*
the plant meal used is a meal of untreated algae, naturally rich in alginic acid, and obtained by the grinding of algae.

## Patentansprüche

1. Rekultivierungsverfahren für einen durch jeglichen menschlichen oder natürlichen Eingriff unfruchtbaren oder verarmten Boden, dadurch gekennzeichnet, daß man vor der Anlage von jeglicher Flora auf dem zu behandelnden Boden auf dem Gelände getrennt vorbehandelte Produkte mit Wasser vermischt, umfassend mindestens ein erstes Produkt, das gebildet wird von: einem humifizierbaren Material, das mit mindestens einem Stickstoff in organischer Form enthaltenden Produkt versetzt ist, das dazu bestimmt ist, das besagte humifizierbare Material fermentieren zu lassen, ein zweites Produkt, das von einem nicht-fermentierten Pflanzenmehl gebildet wird, das reich an mangelverhütenden Spurenelementen ist, sowie ein drittes Produkt, das von Mikroorganismen und Bakterien gebildet wird, und daß man die derart gebildete flüssige Mischung auf den Boden spritzt.

2. Rekultivierungsverfahren nach Anspruch 1, dadurch gekennzeichnet, daß man auf einem Boden, der arm an aktivem Calcium oder Natrium ist, zu der flüssigen Mischung Calcium- oder Natriumkarbonate hinzufügt.

3. Rekultivierungsverfahren nach Anspruch 2, dadurch gekennzeichnet, daß die Karbonate in Form von Schlacken zugeführt werden.

4. Rekultivierungsverfahren nach einem beliebigen der vorangehenden Ansprüche, dadurch gekennzeichnet, daß man gleichzeitig mit oder nach dem Ausbringen des humifizierbaren Materials, des nicht-fermentierten Pflanzenmehls und der Mikroorganismen eine Aussaat von verschiedenen Pflanzenarten durchführt, wobei die Samen der ausgesäten Pflanzen derart ausgewählt werden, daß sie während der zur Bildung von nährenden Zwischenhorizonten im Boden erforderlichen Zeit sich selbst genügen können.

5. Rekultivierungsverfahren nach einem beliebigen der vorangehenden Ansprüche, dadurch gekennzeichnet, daß man gleichzeitig mit oder nach dem Ausbringen des humifizierbaren Materials, des nicht-fermentierten Pflanzenmehls und der Mikroorganismen eine Düngemittelzufuhr durchführt, welche die natürlich im Boden vorhandenen oder durch das besagte humifizierbare Material und das besagte Pflanzenmehl zugeführten Nährstoffe vervollständigt oder in ein Gleichgewicht bringt.

6. Rekultivierungsverfahren nach einem beliebigen der Ansprüche 3 oder 4, dadurch gekennzeichnet, daß man den auf dem Boden ausgestreuten Samen eine Bedeckung verschafft.

7. Rekultivierungsverfahren nach Anspruch 6, dadurch gekennzeichnet, daß die Bedeckung mit Ausnahme von jeglicher Bitumenemulsion einzig und allein in Humussäure umwandelbare Zellulosesubstanzen enthält.

8. Rekultivierungsverfahren nach Anspruch 7, dadurch gekennzeichnet, daß die Bedeckung von kleinen Rückgewinnungspapierpartikeln gebildet wird, die mit Hilfe eines kolloidalen Mittels klebend gemacht worden sind.

9. Rekultivierungsverfahren nach einem beliebigen der vorangehenden Ansprüche, dadurch gekennzeichnet, daß das humifizierbare Material von fein gemahlenem Lignit gebildet wird und mit einer organischen Stickstoffverbindung versetzt ist, die seine Fermentation herbeiführen kann.

10. Rekultivierungsverfahren nach einem beliebigen der vorangehenden Ansprüche, dadurch gekennzeichnet, daß das verwendete Pflanzenmehl marinen Ursprungs ist.

11. Rekultivierungsverfahren nach dem vorangehenden Anspruch, dadurch gekennzeichnet, daß das verwendete Pflanzenmehl ein Mehl aus unbehandelten Algen ist, die auf natürliche Weise reich an Alginsäure sind, und aus der Zerkleinerung von Algen herstammend.
